# EUROPEAN PATENT SPECIFICATION

(11) **EP 3 143 487 B1**
(45) Date of publication and mention of the grant of the patent: **07.04.2021**
(21) Application number: 15719243.6
(22) Date of filing: 05.05.2015
(51) Int. Cl.: G06F 3/12, G03G 15/00, B41J 2/175, B41J 2/165, G06Q 10/06, G06Q 10/08

(54) **METHOD FOR PREDICTING CONSUMPTION OF SUPPLY MATERIAL IN A PRINTING SYSTEM**
VERFAHREN ZUR VORHERSAGE DES VERBRAUCHS VON VERSORGUNGSMATERIAL IN EINEM DRUCKSYSTEM
PROCÉDÉ DE PRÉDICTION DE LA CONSOMMATION DE MATIÈRE D'ALIMENTATION DANS UN SYSTÈME D'IMPRESSION

(30) Priority: 16.05.2014 EP 14168601
(43) Date of publication of application: 22.03.2017
(73) Proprietor: Canon Production Printing Netherlands B.V., 5914 HH Venlo (NL)
(72) Inventor: VAN VONDEREN, Lambertus A.H., NL-5914 CA Venlo (NL); LANGE, Martinus G.M., NL-5914 CA Venlo (NL); ROOD, Jeroen, NL-5914 CA Venlo (NL); CORNETH, Mark M.R., NL-5914 CA Venlo (NL); VAN ROSSUM, Elsemieke P.A., NL-5914 CA Venlo (NL)
(74) Representative: Canon Production Printing IP Department
(86) International application number: PCT/EP2015/059796
(87) International publication number: WO 2015/173063

(56) References cited:
- EP-A2- 0 945 781
- US-A1- 2005 276 618
- US-A1- 2007 216 930
- US-A1- 2009 128 596

## Description

### Field of the invention

The present invention relates to a method for predicting consumption of supply material for a plurality of print jobs in a printing system, each print job intended to consume supply material from at least one supply material container from a plurality of supply material containers in the printing system, the method comprising the steps of scheduling the plurality of print jobs in time, scheduling maintenance actions in time, for each supply material container establishing a supply material level in the supply material container before printing the plurality of print jobs, and for each supply material container calculating a job consumption of supply material from the supply material container for each scheduled print job. A consumption of supply material during a print job may be used to produce printed images or objects. A consumption of supply material during a maintenance action may be seen as a necessary waste of supply material.

The present invention further relates to a printing system configured to apply the method according to the invention.

### Background of the invention

Nowadays print systems provide an estimated required amount of supply material per print job. Nowadays print systems also provide a current status of the supply material levels in the printing system, for example in volume percentage of the supply material container or in weight percentage of a fully loaded supply material container. Nowadays print systems also provide a job schedule of scheduled jobs in time ahead. Nowadays on print systems also maintenance actions have to be carried out which take time and waste certain amounts of supply material. This situation makes it hard for the operator to know at which time and/or at which scheduled print job a supply container becomes empty.

Patent application US 2009/0128596 describes a method for increasing a page yield of an inkjet printer, wherein the page yield is defined as the average number of pages a printer can print per ink cartridge.

It is an objective of the present invention to provide a method for accurately predicting the moment that a supply material container gets empty.

### Summary of the invention

According to the present invention the objective is achieved by the method of claim 1.

The invention also relates to a printing system according to claim 8.

The invention also relates to a recording medium according to claim 9.

Further scope of applicability of the present invention will become apparent from the detailed description given hereinafter. However, it should be understood that the detailed description and specific examples, while indicating embodiments of the invention, are given by way of illustration only, since various changes and modifications will become apparent to those skilled in the art from this detailed description.

### Brief description of the drawings

Figure 1 shows a schematic view of a printing system configured to use the method according to the invention.
Figures 2 - 3 show diagrams of an embodiment of the method according to the invention.

### Detailed description of the embodiments

The present invention will now be described with reference to the accompanying drawings, wherein the same or similar elements are identified with the same reference numerals throughout the several views.

The embodiment is explained by taking in the examples an ink jet printer as a printing system comprising a print head with nozzles as printing elements but are not limited to these choices. In principal any other printing system using any supply material mentioned here-above may use the methods according to the embodiment of the present invention. Another printing system according to the invention may be an electro-graphical printer, a metal jet printer or a 3D printer.

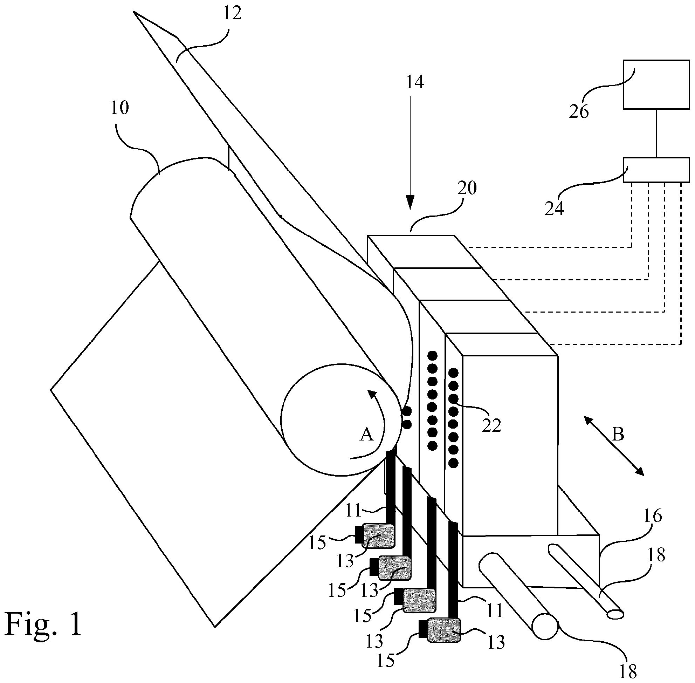

Figure 1 depicts schematically an ink jet printer comprising a platen 10 which serves for transporting a recording medium 12 in a sub-scanning direction (arrow A) past a print head unit 14. The print head unit 14 is mounted on a carriage 16 that is guided on guide rails 18 and is movable back and forth in a main scanning direction (arrow B) relative to the recording medium 12. In the example shown, the print head unit 14 comprises four print heads 20, one for each of the basic colours cyan, magenta, yellow and black. Each print head has a linear array of nozzles 22 extending in the sub-scanning direction. The nozzles 22 of the print heads 20 can be energised individually to eject ink droplets onto the recording medium 12, thereby to print a pixel on the paper. The nozzles 22 are provided with ink by means of conducts 11 which are connected to ink containers 13, one container for each colour of ink. The ink containers 13 are shown as small rectangles. In reality the ink containers may be larger in comparison to the print heads 20. Attached to an ink container 13 is a level sensor 15 for detecting a level of ink in the ink container 13. When the carriage 16 is moved in the direction B across the width of the recording medium 12, a swath of an image can be printed. The number of pixel lines of the swath corresponds to the number of nozzles 22 of each print head. When the carriage 16 has completed one pass, the recording medium 12 is advanced by the width of the swath, so that the next swath can be printed. Besides a printing system printing in swathes, a single pass printing system may also be envisioned. A page wide print head unit may also be envisioned.

The print heads 20 are controlled by a print head controller 24 which receives rasterized print data from an image processor 26 that is capable of high speed image processing. The image processor 26 may be incorporated in the printer or in a remote device, e. g. a print driver in a host computer. The print head controller 24 and the image processor 26 process the print data in a ripping process. Print jobs comprising image data are received by the image processor 26 and rasterized. The rasterized images are submitted to the print head controller 24. The print head controller 24 controls the print heads 20 in order to eject ink from the print heads 20. The ejected ink material establishes an image according to the rasterized image on the receiving medium 12. The print head controller 24 also controls the maintenance actions to be performed regarding the print head. Nozzles may be wiped, ink may be purged using ink from the ink containers 13 in a purge unit (not shown) besides the carriage 16. Calibration test cards may be printed using ink from the ink containers 13.

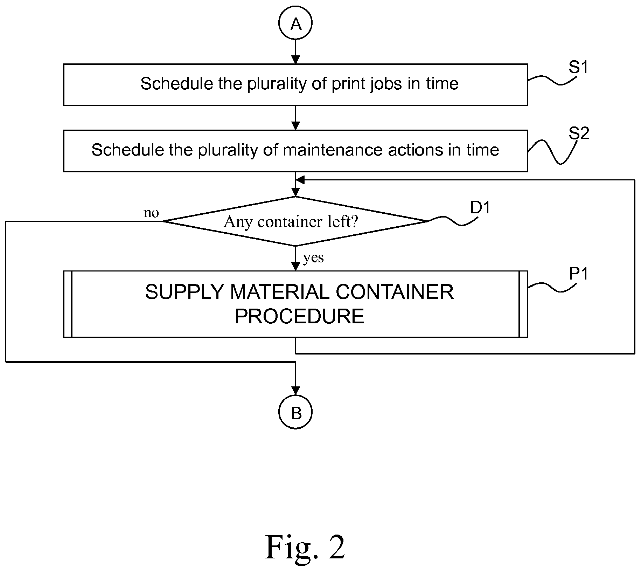

Figures 2 - 3 show diagrams of an embodiment of the method according to the invention. A consumption of supply material for a plurality of print jobs in a printing system is predicted. A print job consumes supply material from a supply material container from a plurality of supply material containers in the printing system. A starting point A leads to a first step S1 of the method.

According to the first step S1 the plurality of print jobs are scheduled in time. Scheduling of jobs may take place in a control unit of the printing system. The control unit may be a computer device at, near or remote from a printing unit of the printing system. Scheduling principles like First-In-First-Out (FIFO) or Last-In-First-Out (LIFO) may be applied. As an example, two print jobs are scheduled: Job1 and Job2. Job1 concerns 10 A0 color (CMYK) prints. Job2 concerns 20 A0 color (CMYK) prints.

According to a second step S2 maintenance actions may be scheduled in time. Scheduling of maintenance actions may also take place in the control unit of the printing system. Scheduling of a maintenance action may be on a time regular basis. Scheduling of maintenance actions may also be based on the amount of supply material which is intended to be consumed by the scheduled print jobs. As an example, before start of the print jobs Job1 and Job 2 a maintenance action is planned which will cost 10 ml per color (CMYK).

In the diagram in Figure 2 the first step S1 and the second step S2 are sequentially executed. However, a parallel execution or interacting execution may be envisioned according to the invention. Each kind of maintenance action may require a different type of maintenance interval, i.e. a time interval or an interval based on consumption by print jobs which are scheduled.

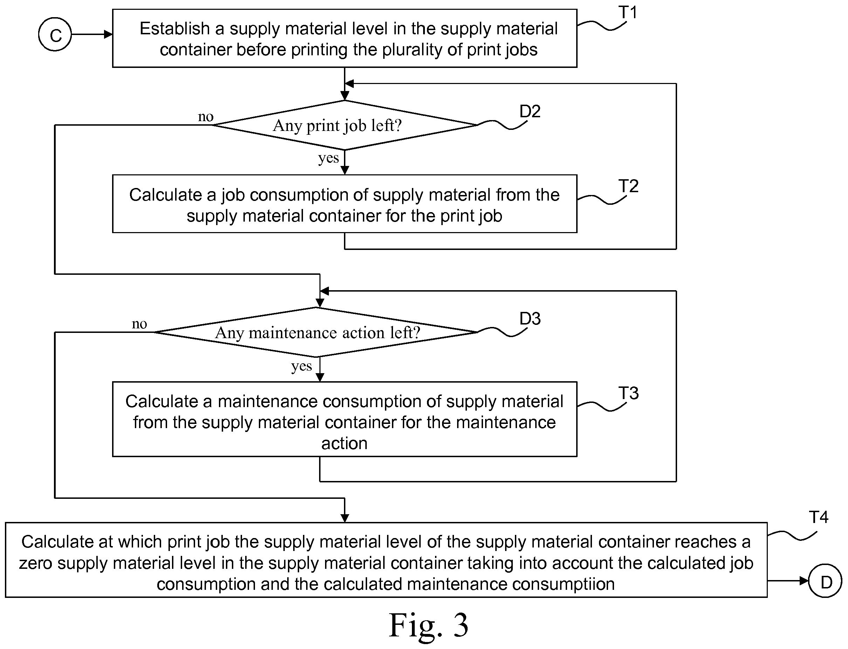

A next procedural step P1 comprises a procedure to be executed for each supply material container in a first loop over the plurality of supply material containers. The first loop starts in a first decision step D1 which checks if there is a supply material container which has not been dealt with.
If there is a supply material container not dealt with according to the method, the method proceeds with the procedural step P1 which is detailed in a diagram in Figure 3. If all supply material containers are dealt with the method ends in end point B.

Figure 3 shows in detail the supply material container procedure P1. A starting point C leads to a first step T1 of the supply material container procedure P1.

According to the first step T1 a supply material level in the supply material container is established before printing the plurality of scheduled print jobs. As an example the initial ink levels in the CMYK containers are established to be equal to: C: 40 ml, M: 130 ml, Y: 80 ml and K: 100 ml.

A second step T2 is executed for each scheduled print job in a second loop over the plurality of scheduled print jobs. The second loop starts in a second decision step D2 which checks if there is a scheduled print job which has not been dealt with. If there is a scheduled print job not dealt with according to the method, the method proceeds with the second step T2. If all scheduled print jobs are dealt with the method proceeds with a third step T3.

According to the second step T2 a job consumption of supply material from the supply material container is calculated for the scheduled print job. In the example, the printing system consumes on average 8 ml per A0 print with no CMYK specification. For a default print mode after rasterizing job1, the consumption becomes more precise per A0 print for job1: 6,5 ml in total, C: 2 ml, M: 1,5 ml, Y: 1 ml and K: 2 ml. However, a print mode known as a double pass mode is applied. A multiplication factor 2 has to be applied to the ink consumption. The consumption per A0 print for Job1 equals: 13 ml in total, C: 4 ml, M: 3 ml, Y: 2 ml and K: 4 ml. The total consumption for 10 A0 prints of Job1 equals: C: 40 ml, M: 30 ml, Y: 20 ml and K: 40 ml. In general, consumption of supply material for a rasterized image on a lowest print mode has to be multiplied by a multiplication factor greater than one for a higher print mode. By a higher print mode is meant a print mode with a higher resolution or with application of more passes during printing.
For a double pass print mode after rasterizing job1, the consumption becomes more precise per A0 print for job2: 13 ml in total, C: 3 ml, M: 4 ml, Y: 1 ml and K: 5 ml. The total consumption for 20 A0 prints of Job1 equals: C: 60 ml, M: 80 ml, Y: 20 ml and K: 100 ml.

A third step T3 is executed for each scheduled maintenance action in a third loop over the plurality of scheduled maintenance actions. The third loop starts in a third decision step D3 which checks if there is a scheduled maintenance action which has not been dealt with. If there is a scheduled maintenance action not dealt with according to the method, the method proceeds with the third step T3. If all scheduled maintenance actions are dealt with the method proceeds with a fourth step T4.

According to the third step T3 a maintenance consumption of supply material from the supply material container is calculated for the scheduled maintenance action. Only one maintenance action is scheduled - before start of the print jobs Job1 and Job 2 - and this maintenance action will cost 40 ml ink in total, more precisely: C: 10 ml, M: 10 ml, Y: 10 ml and K: 10 ml.

It may be evident for the skilled person that the steps T1 - T3 may be executed in an arbitrary order. The steps may be executed sequential or in parallel or in a combination of a sequential order and a parallel order.

According to a fourth step T4 it is calculated at which print job the supply material level of the supply material container reaches a zero supply material level in the supply material container taking into account the calculated job consumption of the supply material in the supply material container and taking into account the calculated maintenance consumption of the supply material in the supply material container.
The color ink C from ink container C will exhaust during Job1, since the maintenance action before Job1 costs 10 ml and Job1 costs 40 ml C ink while the initial level of C ink was 40 ml. The zero level of the C ink container will be reached during Job1. Replenishment of the C ink container is to be advised before the start of Job1.
The color ink M from ink container M will not exhaust, since the maintenance action before Job1 costs 10 ml, Job1 costs 30 ml M ink and Job2 costs 80 ml M ink, while the initial level of M ink was 130 ml.
The color ink Y from ink container Y will not exhaust, since the maintenance action before Job1 costs 10 ml, Job1 costs 20 ml Y ink and Job2 costs 20 ml Y ink, while the initial level of Y ink was 80 ml.
The color ink K from ink container K will exhaust during Job2, since the maintenance action before Job1 costs 10 ml, Job1 costs 40 ml K ink and Job2 costs 100 ml K ink, while the initial level of K ink was 100 ml. The zero level of the K ink container will be reached during Job2. Replenishment of the K ink container is to be advised before the start of Job2.

The given example of Job1 and Job2 is rather uncomplicated for convenience reasons, but more complicated schedules of print jobs and schedules of maintenance jobs may be envisioned.

The procedure ends in an end point D.

The example is limited to print job and ink maintenance scheduling in an inkjet printing system. However, the invention may also be applied to other supply materials in another kind of printing system, like toner in electro-graphical printing, plastic in 3D plastic jet printing, metal in metal jet printing, or to recording media like paper, overhead sheets, rolls, textile in inkjet printing as well as in electro-graphical printing.

## Claims

1. Method for predicting consumption of supply material for a plurality of print jobs in a printing system, each print job intended to consume supply material from at least one supply material container from a plurality of supply material containers (13) in the printing system, the method comprising the steps of
a) scheduling (S1) the plurality of print jobs in time,
b) scheduling (S2) maintenance actions in time,
c) for each supply material container establishing (T1) a supply material level in the supply material container before printing the plurality of print jobs,
d) for each supply material container calculating (T2) a job consumption of supply material from the supply material container for each scheduled print job,
e) for each supply material container calculating (T3) a maintenance consumption of supply material from the supply material container for each scheduled maintenance action, and
f) for each supply material container calculating (T4) at which print job the supply material level of the supply material container reaches a zero supply material level in the supply material container taking into account a sum over the plurality of print jobs of the calculated job consumption of the supply material in the supply material container and the calculated maintenance consumption of the supply material in the supply material container,
wherein the method comprises the step of establishing the actual contents of each supply material container of the plurality of supply material containers after a print job has been printed and/or after a maintenance job has been performed and adjusting the calculation in step f) accordingly, and
wherein the method comprises the step of for at least one supply material container of the plurality of supply material containers displaying on a time line the plurality of print jobs and an indicative item at the print job at which the supply material level in the at least one supply material container reaches the zero supply material level.

2. Method according to claim 1, wherein step f) comprises the sub-step of comparing the sum over the plurality of print jobs of the calculated job consumption of the supply material in the supply material container and the calculated maintenance consumption of the supply material in the supply material container with the established supply material level in the supply material container before printing of the plurality of print jobs.

3. Method according to claim 1, wherein the supply material is at least one material out of a group of inks, toners, plastics, metals.

4. Method according to claim 1, wherein the supply material is a medium material.

5. Method according to claim 1, wherein the method comprises the step of displaying an indicative item at the print job at which a supply material level of an supply material container of the plurality of supply material containers reaches the zero supply material level first in time compared to supply material levels of the other supply material containers.

6. Method according to claim 1, wherein the method comprises the step of for each print job on the time line retrieving a print mode specified in print job settings of the print job and rasterizing at least one image of the print job and for each print job on the time line calculating the amount of supply material consumption for each supply material container based on the at least one rasterized image and the retrieved print mode.

7. Method according to claim 1, wherein the method comprises the step of changing the print order of the plurality of print jobs and/or changing the maintenance order of the maintenance actions and for each supply material container recalculating at which print job the supply material level in the container reaches a zero supply material level taking into account the changed print order and/or the changed maintenance order respectively.

8. Printing system for printing a plurality of print jobs, the printing system comprising supply material containers (13) for a plurality of supply materials to be used when printing the plurality of print jobs, an establishing device for establishing a supply material level in the supply material container (13) for each supply material of the plurality of supply materials before printing a print job of the plurality of print jobs, and a control unit (24) for controlling the printing of the print jobs and for controlling maintenance actions to be performed during printing of the plurality of print jobs, the control unit (24) comprising a scheduler for scheduling the print jobs and the maintenance actions on a time line, a calculator configured to calculate for each supply material of the plurality of supply materials a job consumption of the supply material from the supply material container (13) for each job scheduled on the time line and to calculate for each supply material of the plurality of supply materials a maintenance consumption of the supply material from the supply material container (13) for each maintenance action scheduled on the time line, wherein the calculator is configured to calculate for each supply material container (13) at which print job the supply material level in the supply material container (13) reaches a zero supply material level taking into account a sum over the plurality of print jobs of the calculated job consumptions of the supply material from the supply material container (13) and the calculated maintenance consumptions of the supply material from the supply material container (13), wherein the calculator is configured to establish the actual contents of each supply material container (13) of the plurality of supply material containers after a print job has been printed and/or after a maintenance job has been performed and to adjust the calculation of the print job at which the supply material level in the supply material container (13) reaches a zero supply material level, and
wherein the printing system is configured to display for at least one supply material container (13) of the plurality of supply material containers on a time line the plurality of print jobs and an indicative item at the print job at which the supply material level in the at least one supply material container (13) reaches the zero supply material level.

9. Software medium comprising computer executable program code which, when executed by a computer, causes the computer to perform the steps of the method according to any of the claims 1 - 7.

## Patentansprüche

1. Verfahren zur Vorhersage des Verbrauchs von Verbrauchsmaterial für eine Vielzahl von Druckaufträgen in einem Drucksystem, wobei jeder Druckauftrag Verbrauchsmaterial aus wenigstens einem Verbrauchsmaterialbehälter unter einer Vielzahl von Verbrauchsmaterialbehältern (13) in dem Drucksystem verbrauchen soll, welches Verfahren die folgenden Schritte aufweist:
a) planen (S1) der Vielzahl der Druckaufträge in ihrem Zeitablauf,
b) planen (S2) von Wartungsaktionen in ihrem Zeitablauf,
c) für jeden Verbrauchsmaterialbehälter: feststellen (T1) eines Verbrauchmaterialpegels in dem Verbrauchsmaterialbehälter vor dem Drucken der Vielzahl der Druckaufträge,
d) für jeden Verbrauchsmaterialbehälter: berechnen (T2) eines Druckauftrags-Verbrauchs des Verbrauchmaterials aus dem Verbrauchsmaterialbehälter für jeden geplanten Druckauftrag,
e) für jeden Verbrauchsmaterialbehälter: berechnen (T3) eines Wartungs-Verbrauchs von Verbrauchsmaterial aus dem Verbrauchsmaterialbehälter für jede geplante Wartungsaktion, und
f) für jeden Verbrauchsmaterialbehälter: berechnen (T4), bei welchem Druckauftrag der Verbrauchsmaterialpegel in dem Verbrauchsmaterialbehälter einen Nullpegel des Verbrauchsmaterials in dem Verbrauchsmaterialbehälter erreicht, unter Berücksichtigung einer über die Vielzahl der Druckaufträge gebildeten Summe der berechneten Druckauftrags-Verbräuche an Verbrauchsmaterial in dem Verbrauchsmaterialbehälter und der berechneten Wartungs-Verbräuche an Verbrauchsmaterial in dem Verbrauchsmaterialbehälter,
wobei das Verfahren den folgenden Schritt aufweist: feststellen des aktuellen Inhalts jedes Verbrauchsmaterialbehälters aus der Vielzahl der Verbrauchsmaterialbehälter nachdem ein Druckauftrag gedruckt worden ist und/oder nachdem ein Wartungsauftrag ausgeführt worden ist, und entsprechendes Anpassen der Berechnung in Schritt f), und
wobei das Verfahren den folgenden Schritt aufweist: für wenigstens einen Verbrauchsmaterialbehälter aus der Vielzahl der Verbrauchsmaterialbehälter, anzeigen der Vielzahl der Druckaufträge auf einer Zeitlinie und anzeigen eines Anzeigeobjekts an dem Druckauftrag, bei dem der Verbrauchsmaterialpegel in wenigstens einem der Verbrauchsmaterialbehälter den Nullpegel erreicht.

2. Verfahren nach Anspruch 1, bei dem der Schritt f) den Teilschritt des Vergleichens der über die Vielzahl der Druckaufträge gebildeten Summe der berechneten Druckauftrags-Verbräuche an Verbrauchsmaterial in dem Verbrauchsmaterialbehälter und der berechneten Wartungs-Verbräuche an Verbrauchsmaterial in dem Verbrauchsmaterialbehälter mit dem festgestellten Verbrauchsmaterialpegel in dem Verbrauchsmaterialbehälter vor dem Drucken der Vielzahl der Druckaufträge umfasst.

3. Verfahren nach Anspruch 1, bei dem das Verbrauchsmaterial wenigstens ein Material aus der Gruppe ist, die Tinten, Toner, Kunststoffe, Metalle umfasst.

4. Verfahren nach Anspruch 1, bei dem das Verbrauchsmaterial ein Medienmaterial ist.

5. Verfahren nach Anspruch 1, bei dem das Verfahren den folgenden Schritt aufweist: anzeigen eines Anzeigeobjekts an dem Druckauftrag, bei dem der Verbrauchsmaterialpegel eines Verbrauchsmaterialbehälters aus der Vielzahl der Verbrauchsmaterialbehälter den Nullpegel zeitlich zuerst erreicht, im Vergleich zu Verbrauchsmaterialpegeln i den anderen Verbrauchsmaterialbehältern.

6. Verfahren nach Anspruch 1, bei dem das Verfahren die folgenden Schritte aufweist: für jeden Druckauftrag auf der Zeitlinie, abrufen eines Druckmodus, der in Druckauftragseinstellungen des Druckauftrages spezifiziert ist, und rastern wenigstens eines Bildes aus dem Druckauftrag, und, für jeden Druckauftrag auf der Zeitlinie, berechnen der Menge des Verbrauchs an Verbrauchsmaterial für jeden Verbrauchsmaterialbehälter auf der Grundlage des wenigstens einen gerasterten Bildes und des abgerufenen Druckmodus.

7. Verfahren nach Anspruch 1, bei dem das Verfahren den folgenden Schritt aufweist: ändern der Druckreihenfolge der Vielzahl der Druckaufträge und/oder ändern der Wartungsreihenfolge der Wartungsaktionen, und, für jeden Verbrauchsmaterialbehälter, neu berechnen, bei welchem Druckauftrag der Verbrauchsmaterialpegel in dem Behälter den Nullpegel erreicht, unter Berücksichtigung der geänderten Druckreihenfolge bzw. der geänderten Wartungsreihenfolge.

8. Drucksystem zum Drucken einer Vielzahl von Druckaufträgen, welches Drucksystem Verbrauchsmaterialbehälter (13) für eine Vielzahl von Verbrauchsmaterialien , die beim Drucken der Vielzahl der Druckaufträge verwendet werden sollen, eine Ermittlungseinrichtung zum Feststellen eines Verbrauchsmaterialpegels in dem Verbrauchsmaterialbehälter (13) für jedes Verbrauchsmaterial aus der Vielzahl der Verbrauchsmaterialien bevor ein Druckauftrag aus der Vielzahl der Druckaufträge gedruckt wird, und eine Steuereinheit (24) aufweist, zur Steuerung des Druckens der Druckaufträge und zur Steuerung von Wartungsaktionen, die während des Druckens der Vielzahl der Druckaufträge auszuführen sind, wobei die Steuereinheit (24) ein Planungsmodul zum Planen der Druckaufträge und der Wartungsaktionen auf einer Zeitlinie und einen Rechner aufweist, der dazu konfiguriert ist, für jedes Verbrauchsmaterial aus der Vielzahl der Verbrauchsmaterialien einen Druckauftrags-Verbrauch an Verbrauchsmaterial aus dem Verbrauchsmaterialbehälter (13) für jeden geplanten Druckauftrag auf der Zeitlinie zu berechnen und für jedes Verbrauchsmaterial aus der Vielzahl der Verbrauchsmaterialien einen Wartungs-Verbrauch an Verbrauchsmaterial aus dem Verbrauchsmaterialbehälter (13) für jede geplante Wartungsaktion auf der Zeitlinie zu berechnen, wobei der Rechner dazu konfiguriert ist, für jeden Verbrauchsmaterialbehälter (13) zu berechnen, bei welchem Druckauftrag der Verbrauchsmaterialpegel in dem Verbrauchsmaterialbehälter (13) einen Nullpegel erreicht, unter Berücksichtigung einer über die Vielzahl der Druckaufträge gebildeten Summe der berechneten Druckauftrags-Verbräuche an Verbrauchsmaterial aus dem Verbrauchsmaterialbehälter (13) und der berechnen Wartungs-Verbräuche an Verbrauchsmaterial aus dem Verbrauchsmaterialbehälter (13), wobei der Rechner dazu konfiguriert ist, den aktuellen Inhalt jedes Verbrauchsmaterialbehälters (13) aus der Vielzahl von Verbrauchsmaterialbehältern festzustellen, nachdem ein Druckauftrag gedruckt worden ist und/oder ein Wartungsauftrag ausgeführt worden ist, und die Berechnung des Druckauftrages, bei dem der Verbrauchsmaterialpegel in dem Verbrauchsmaterialbehälter (13) den Nullpegel erreicht, anzupassen, und
wobei das Drucksystem dazu konfiguriert ist, für wenigstens einen Verbrauchsmaterialbehälter (13) aus der Vielzahl der Verbrauchsmaterialbehälter auf einer Zeitlinie die Vielzahl der Druckaufträge und ein Anzeigeobjekt an dem Druckauftrag anzuzeigen, bei dem der Verbrauchsmaterialpegel in dem wenigstens einen Verbrauchsmaterialbehälter (13) den Nullpegel erreicht.

9. Softwaremedium mit von einem Computer ausführbaren Programmcode, der, wenn er von einem Computer ausgeführt wird, den Computer veranlasst, die Schritte des Verfahrens nach einem der Ansprüche 1 bis 7 auszuführen.

## Revendications

1. Procédé pour prévoir la consommation de matière d'alimentation pour une pluralité de travaux d'impression dans un système d'impression, chaque travail d'impression étant destiné à consommer de la matière d'alimentation provenant d'au moins un conteneur de matière d'alimentation parmi une pluralité de conteneurs de matière d'alimentation (13) dans le système d'impression, le procédé comprenant les étapes consistant à
a) planifier (S1) la pluralité de travaux d'impression dans le temps,
b) planifier (S2) des actions de maintenance dans le temps,
c) pour chaque conteneur de matière d'alimentation, établir (T1) un niveau de matière d'alimentation dans le conteneur de matière d'alimentation avant impression de la pluralité de travaux d'impression,
d) pour chaque conteneur de matière d'alimentation, calculer (T2) une consommation de travail de matière d'alimentation provenant du conteneur de matière d'alimentation pour chaque travail d'impression planifié,
e) pour chaque conteneur de matière d'alimentation, calculer (T3) une consommation de maintenance de matière d'alimentation provenant du conteneur de matière d'alimentation pour chaque action de maintenance planifiée, et
f) pour chaque conteneur de matière d'alimentation, calculer (T4) auquel travail d'impression le niveau de matière d'alimentation du conteneur de matière d'alimentation atteint un niveau de matière d'alimentation nul dans le conteneur de matière d'alimentation en tenant compte d'une somme sur la pluralité de travaux d'impression de la consommation de travail calculée de la matière d'alimentation dans le conteneur de matière d'alimentation et la consommation de maintenance calculée de la matière d'alimentation dans le conteneur de matière d'alimentation,
dans lequel le procédé comprend l'étape d'établissement du contenu réel de chaque conteneur de matière d'alimentation de la pluralité de conteneurs de matière d'alimentation après qu'un travail d'impression a été imprimé et/ou après qu'un travail de maintenance a été effectué et de réglage du calcul dans l'étape f) en conséquence, et
dans lequel le procédé comprend l'étape, pour au moins un conteneur de matière d'alimentation de la pluralité de conteneurs de matière d'alimentation, d'affichage sur une ligne de temps de la pluralité de travaux d'impression et d'un élément indicatif au niveau du travail d'impression auquel le niveau de matière d'alimentation dans l'au moins un conteneur de matière d'alimentation atteint le niveau de matière d'alimentation nul.

2. Procédé selon la revendication 1, dans lequel l'étape f) comprend la sous-étape de comparaison de la somme sur la pluralité de travaux d'impression de la consommation de travail calculée de la matière d'alimentation dans le conteneur de matière d'alimentation et de la consommation de maintenance calculée de la matière d'alimentation dans le conteneur de matière d'alimentation au niveau de matière d'alimentation établi dans le conteneur de matière d'alimentation avant impression de la pluralité de travaux d'impression.

3. Procédé selon la revendication 1, dans lequel la matière d'alimentation est au moins une matière parmi un groupe d'encres, d'encres en poudre, de plastiques, de métaux.

4. Procédé selon la revendication 1, dans lequel la matière d'alimentation est une matière médium.

5. Procédé selon la revendication 1, dans lequel le procédé comprend l'étape d'affichage d'un élément indicatif au niveau du travail d'impression auquel un niveau de matière d'alimentation d'un conteneur de matière d'alimentation de la pluralité de conteneurs de matière d'alimentation atteint le niveau de matière d'alimentation nul en premier dans le temps en comparaison à des niveaux de matière d'alimentation des autres conteneurs de matière d'alimentation.

6. Procédé selon la revendication 1, dans lequel le procédé comprend l'étape, pour chaque travail d'impression sur la ligne de temps, de récupération d'un mode d'impression spécifié dans des paramètres de travail d'impression du travail d'impression et de tramage d'au moins une image du travail d'impression et pour chaque travail d'impression sur la ligne de temps, de calcul de la quantité de consommation de matière d'alimentation pour chaque conteneur de matière d'alimentation sur la base de l'au moins une image tramée et du mode d'impression récupéré.

7. Procédé selon la revendication 1, dans lequel le procédé comprend l'étape de changement de l'ordre d'impression de la pluralité de travaux d'impression et/ou de changement de l'ordre de maintenance des actions de maintenance et pour chaque conteneur de matière d'alimentation, de recalcul auquel travail d'impression le niveau de matière d'alimentation dans le conteneur atteint un niveau de matière d'alimentation nul en tenant respectivement compte de l'ordre d'impression changé et/ou de l'ordre de maintenance changé.

8. Système d'impression pour imprimer une pluralité de travaux d'impression, le système d'impression comprenant des conteneurs de matière d'alimentation (13) pour une pluralité de matières d'alimentation à utiliser en imprimant la pluralité de travaux d'impression, un dispositif d'établissement pour établir un niveau de matière d'alimentation dans le conteneur de matière d'alimentation (13) pour chaque matière d'alimentation de la pluralité de matières d'alimentation avant impression d'un travail d'impression de la pluralité de travaux d'impression, et une unité de commande (24) pour commander l'impression des travaux d'impression et pour commander des actions de maintenance à effectuer pendant l'impression de la pluralité de travaux d'impression, l'unité de commande (24) comprenant un planificateur pour planifier les travaux d'impression et les actions de maintenance sur une ligne de temps, un calculateur configuré pour calculer pour chaque matière d'alimentation de la pluralité de matières d'alimentation une consommation de travail de la matière d'alimentation provenant du conteneur de matière d'alimentation (13) pour chaque travail planifié sur la ligne de temps et pour calculer pour chaque matière d'alimentation de la pluralité de matières d'alimentation une consommation de maintenance de la matière d'alimentation provenant du conteneur de matière d'alimentation (13) pour chaque action de maintenance planifiée sur la ligne de temps, dans lequel le calculateur est configuré pour calculer pour chaque conteneur de matière d'alimentation (13) auquel travail d'impression le niveau de matière d'alimentation dans le conteneur de matière d'alimentation (13) atteint un niveau de matière d'alimentation nul en tenant compte d'une somme sur la pluralité de travaux d'impression des consommations de travail calculées de la matière d'alimentation provenant du conteneur de matière d'alimentation (13) et des consommations de maintenance calculées de la matière d'alimentation provenant du conteneur de matière d'alimentation (13), dans lequel le calculateur est configuré pour établir le contenu réel de chaque conteneur de matière d'alimentation (13) de la pluralité de conteneurs de matière d'alimentation après qu'un travail d'impression a été imprimé et/ou après qu'un travail de maintenance a été effectué et pour ajuster le calcul du travail d'impression auquel le niveau de matière d'alimentation dans le conteneur de matière d'alimentation (13) atteint un niveau de matière d'alimentation nul, et
dans lequel le système d'impression est configuré pour afficher pour au moins un conteneur de matière d'alimentation (13) de la pluralité de conteneurs de matière d'alimentation sur une ligne de temps la pluralité de travaux d'impression et un élément indicatif au niveau du travail d'impression auquel le niveau de matière d'alimentation dans l'au moins un conteneur de matière d'alimentation (13) atteint le niveau de matière d'alimentation nul.

9. Support de logiciel comprenant du code de programme informatique exécutable qui, lorsqu'il est exécuté par un ordinateur, amène l'ordinateur à effectuer les étapes du procédé selon l'une quelconque des revendications 1-7.
